# FASCICULE DE BREVET EUROPEEN

(11) **EP 4 073 355 B1**
(45) Date de publication et mention de la délivrance du brevet: **13.09.2023**
(21) Numéro de dépôt: 20828533.8
(22) Date de dépôt: 01.12.2020
(51) Int. Cl.: F01D 25/18, F02C 7/06, F02C 7/36, F02K 3/06, F02C 3/067

(54) **RECUPERATION D'HUILE DE LUBRIFICATION D'UN REDUCTEUR DE TURBOMACHINE D'AERONEF**
SCHMIERÖLRÜCKGEWINNUNG AUS EINEM REDUKTIONSGETRIEBE EINES FLUGZEUGTRIEBWERKS
RECOVERY OF LUBRICATING OIL FROM A REDUCTION GEAR OF AN AIRCRAFT TURBINE ENGINE

(30) Priorité: 10.12.2019 FR 1914016
(43) Date de publication de la demande: 19.10.2022
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BELMONTE, Olivier, 77550 MOISSY-CRAMAYEL (FR); CHASSAGNE, Amélie Argie Antoinette, 77550 MOISSY-CRAMAYEL (FR)
(74) Mandataire: Gevers & Orès
(86) Numéro de dépôt international: PCT/FR2020/052231
(87) Numéro de publication internationale: WO 2021/116557

(56) Documents cités:
- EP-A1- 3 447 243
- EP-A2- 2 820 280
- FR-A1- 3 035 375

## Description

### Domaine technique de l'invention

La présente invention concerne la récupération et l'évacuation d'huile de lubrification d'un réducteur mécanique dans une turbomachine d'aéronef. Cette invention s'applique particulièrement mais non exclusivement à une turbomachine à turbine contrarotative.

### Arrière-plan technique

L'arrière-plan technique comprend notamment les documents EP-A2-2 820 280, EP-A1-3 447 243 et FR-A1-3 035 375.

De manière classique, une turbomachine d'aéronef comprend d'amont en aval, dans le sens d'écoulement des gaz, une soufflante, un compresseur basse pression, un compresseur haute pression, une chambre annulaire de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

D'un point de vue performance moteur et consommation, il est avantageux de maximiser la vitesse de rotation de la turbine basse pression car cela permet d'obtenir un meilleur rendement de la turbine. Cependant, augmenter la vitesse de rotation de la turbine implique d'augmenter les efforts centrifuges qu'elle subit, et complique donc fortement sa conception.

Une suggestion pour augmenter le rendement d'une turbine sans pour autant augmenter sa vitesse de rotation consiste à utiliser une turbine contrarotative. La turbine basse pression est alors remplacée par une turbine à deux rotors dont un premier rotor est configuré pour tourner dans un premier sens de rotation et est relié à un premier arbre de turbine, et un second rotor est configuré pour tourner dans un sens opposé de rotation et est relié à un second arbre de turbine. Le premier rotor comporte des roues de turbine intercalées entre des roues de turbine du second rotor.

Une turbine basse pression peut avoir une vitesse de rotation au décollage de l'ordre de 4.000 tours par minute dans une architecture classique où la turbine entraine directement la soufflante ou une vitesse de rotation au décollage de l'ordre de 10.000 tours par minute dans une architecture où la turbine entraine la soufflante par l'intermédiaire d'un réducteur. Son remplacement par une turbine contrarotative dont les rotors tournent respectivement à des vitesses au décollage de l'ordre de 3.000 et 7.000 tours par minute permet d'avoir une vitesse relative de 10.000 tours par minute (3000+7000) tout en ayant une vitesse absolue dans une tranche basse de l'intervalle de vitesse précité.

Cette turbine contrarotative comprend ainsi un rotor lent et un rotor rapide, le rotor lent entraînant la soufflante et le rotor rapide engrenant avec un réducteur mécanique à train épicycloïdal de type planétaire dont l'entrée et la sortie sont contrarotatives (couronne tournante, porte-satellites fixe, solaire tournant).

Le réducteur couple le rotor rapide et le rotor lent, permettant ainsi un transfert de puissance du rotor rapide vers le rotor lent. On profite des rendements supérieurs d'une turbine rapide tout en transférant une large part de la puissance de la turbine vers la soufflante sans transiter par un réducteur mais par un arbre.

Cette architecture est complexe de par son intégration mécanique : le réducteur mécanique est situé à l'aval de la turbomachine, radialement à l'intérieur d'un carter de stator appelé carter d'échappement.

Par ailleurs, le réducteur dégageant une énergie considérable (de l'ordre de 100kW) en fonctionnement, celui-ci doit être lubrifié continuellement afin de maintenir une température de fonctionnement acceptable. Un circuit d'huile est donc implémenté afin d'alimenter le réducteur en huile. L'évacuation de l'huile est un problème essentiel. En effet, celle-ci doit être récupérée et évacuée. Cependant, la technique actuelle ne propose pas de solution optimale de récupération et d'évacuation d'huile dans cet environnement restreint.

### Résumé de l'invention

La présente invention propose un perfectionnement à la technologie décrite ci-dessus, qui représente une solution simple, efficace et économique au problème évoqué ci-dessus.

L'invention propose une turbomachine pour un aéronef, cette turbomachine ayant un axe longitudinal et comportant :
- au moins un premier rotor de turbine relié à un premier arbre de turbine et comportant des aubes de rotor situées dans une veine,
- un carter annulaire d'échappement supportant au moins un palier de guidage en rotation dudit premier arbre autour de l'axe et comprenant des bras situés dans ladite veine, en aval desdites aubes, et
- un réducteur mécanique à train épicycloïdal de type planétaire qui comporte un solaire, une couronne, et un porte-satellites, le réducteur étant au moins en partie entouré par ledit carter d'échappement et l'un des éléments mobiles en rotation autour de l'axe choisis parmi le solaire et la couronne du réducteur étant relié audit premier arbre,
caractérisée en ce que ledit carter d'échappement porte un dispositif de récupération et d'évacuation d'huile projetée par centrifugation en fonctionnement par le réducteur, ce dispositif comportant une gouttière annulaire de récupération d'huile qui s'étend autour du réducteur et qui est raccordée à au moins un conduit d'évacuation d'huile qui traverse un desdits bras dudit carter d'échappement.

L'invention propose ainsi un dispositif de récupération et d'évacuation d'huile particulièrement conçu pour son intégration dans un environnement comportant un réducteur mécanique et un carter d'échappement entourant ce réducteur. Le dispositif comprend pour l'essentiel deux parties à savoir une gouttière de récupération d'huile et au moins un conduit d'évacuation de cette huile. La gouttière est intercalée entre le réducteur et le carter d'échappement et est destinée à récupérer l'huile projetée par centrifugation en fonctionnement, en particulier à travers la couronne ou un porte-couronne du réducteur. Chacun des conduits s'étend depuis la gouttière jusque dans et à travers un bras afin d'évacuer l'huile depuis l'intérieur du carter d'échappement radialement vers l'extérieur. Le dispositif est donc adapté à l'environnement spécifique évoqué plus haut et a avantageusement peu ou pas d'impact sur l'aérodynamique du moteur.

La turbomachine selon l'invention peut comprendre une ou plusieurs des caractéristiques ci-dessous, prises isolément les unes des autres ou en combinaison les unes avec les autres :
- ladite gouttière comprend une surface annulaire radialement interne de réception et de guidage d'huile, qui est bordée axialement par deux nervures annulaires ;
- les deux nervures comprennent une première nervure formée d'une seule pièce avec une première paroi annulaire, et une seconde nervure formée d'une seule pièce avec une seconde paroi annulaire, l'une des première et seconde parois comportant ladite surface et lesdites première et seconde parois annulaires étant montées coaxialement l'une à l'intérieur de l'autre ;
- lesdites premières et secondes parois comprennent des brides annulaires de fixation entre elles et à une bride annulaire de fixation dudit carter d'échappement ;
- une cloison s'étend autour d'une portion angulaire d'une surface annulaire radialement externe de la gouttière et définit avec cette surface une chambre de récupération d'huile, la gouttière comportant des ouvertures débouchant sur lesdites surfaces annulaires pour la mise en communication fluidique de ladite chambre avec un espace inter-nervures, et ladite cloison comportant au moins un orifice raccordé audit au moins un conduit en vue de l'évacuation d'huile récupérée dans ladite chambre ;
- ledit au moins un orifice est formé dans un bossage de la cloison ;
- ledit dispositif comprend deux conduits d'évacuation d'huile et ladite cloison comprend deux orifices raccordés respectivement à ces deux conduits ;
- ladite chambre est traversée par un plan vertical passant par ledit axe ;
- lesdits orifices sont situés de part et d'autre dudit plan ;
   -- les orifices sont écartés l'un de l'autre d'un angle permettant d'assurer dans tout l'enveloppe de vol (toutes les attitudes de l'avion) l'évacuation d'huile ;
   -- les orifices sont écartés l'un de l'autre d'un angle inférieur ou égal à 120°, mesuré autour dudit axe ;
- ledit au moins un conduit est incliné par rapport à un plan passant par ledit axe ;
- ladite gouttière est entourée par un revêtement annulaire d'isolation thermique ;
- un espace annulaire de circulation d'air est conservé entre ledit revêtement et ledit carter d'échappement ;
   -- ladite chambre a une étendue angulaire autour dudit axe comprise entre 10 et 90° ;
   -- le ou chaque bossage est configuré pour assurer directement, ou par l'intermédiaire d'un joint d'étanchéité, un raccordement fluidique avec le conduit correspondant ;
   -- dans le cas où plusieurs conduits évacuent de l'huile, ces conduits sont raccordés à une même pompe ;
   -- le ou chaque conduit a en section une forme quelconque et par exemple elliptique ;
   -- la turbomachine est du type à hélices externes contrarotatives, qui peuvent être carénées ou non carénées ;
   -- la turbomachine est du type à une unique soufflante carénée ;
   -- la turbomachine est du type à turbine contrarotative, le premier rotor étant configuré pour tourner dans un premier sens de rotation, la turbomachine comportant un second rotor configuré pour tourner dans un sens opposé de rotation et relié d'une part à un second arbre de turbine et d'autre part à l'autre desdits éléments choisis parmi le solaire et la couronne du réducteur.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue très schématique en coupe axiale d'une turbomachine à turbine contrarotative,
[Fig.2] la figure 2 est une autre vue très schématique d'une turbomachine à turbine contrarotative,
[Fig.3] la figure 3 est une vue schématique en coupe axiale d'un mode de réalisation d'une turbomachine selon l'invention, et montre un dispositif de récupération et d'évacuation d'huile,
[Fig.4] la figure 4 est une vue très schématique en coupe axiale du concept du dispositif de la figure 3, en particulier lorsque la turbomachine est dans une position particulière par rapport à un plan horizontal ;
[Fig.5] la figure 5 est une vue similaire à celle de la figure 4 lorsque la turbomachine est dans une position inclinée par rapport à un plan horizontal ; [Fig.6] la figure 6 est une vue schématique en coupe et à plus grande échelle du dispositif de la figure 3 ;
[Fig.7] la figure 7 est une vue similaire à la figure 6, la coupe étant réalisée dans une partie basse de la turbomachine et du dispositif ;
[Fig.8] la figure 8 est une vue schématique en perspective de la partie basse du dispositif, dans laquelle est située une chambre de récupération d'huile, [Fig.9] la figure 9 est une autre vue schématique en perspective de la partie basse du dispositif, et
[Fig.10] la figure 10 est une autre vue schématique en perspective de la partie basse du dispositif, et illustre une variante de réalisation.

### Description détaillée de l'invention

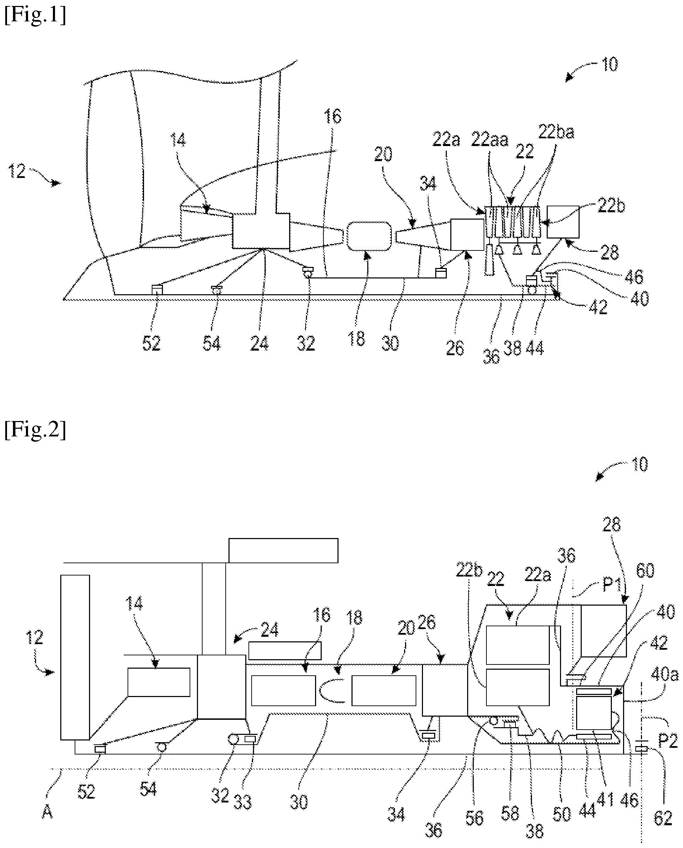

La figure 1 représente de manière très schématique une turbomachine 10 à turbine contrarotative pour un aéronef.

Cette turbomachine 10 comprend d'amont en aval, dans le sens d'écoulement des gaz, une soufflante 12, un compresseur basse pression 14, un compresseur haute pression 16, une chambre annulaire de combustion 18, une turbine haute pression 20 et une turbine contrarotative 22.

La référence 24 désigne un carter intermédiaire situé entre les compresseurs 14 et 16, et la référence 26 désigne un carter de turbine (du type TVF, acronyme de l'anglais Turbine Vane Frame qui désigne un carter de turbine équipé de bras formant des aubages de redresseur) situé entre les turbines 20 et 22. Enfin, la référence 28 désigne un carter d'échappement (du type TRF, acronyme de l'anglais Turbine Rear Frame qui désigne le dernier carter de turbine). Ces carters forment la structure de la turbomachine : ils supportent les paliers qui guident les arbres en rotation et sont liés aux suspensions de la turbomachine.

Le rotor de la turbine haute pression 20 entraîne en rotation le rotor du compresseur haute pression 16 par un arbre haute pression 30 qui est centré et guidé en rotation par des paliers, tels qu'un palier amont 32 à billes et un palier aval 34 à rouleaux. Le palier 32 est monté entre une extrémité amont de l'arbre 30 et le carter intermédiaire 24, et le palier 34 est monté entre une extrémité aval de l'arbre 30 et le carter de turbine 26.

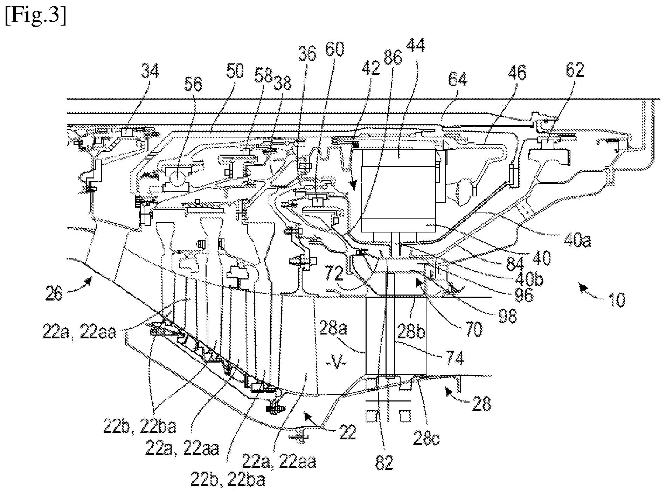

La turbine contrarotative 22 comprend un premier rotor 22a dont des roues 22aa sont configurées pour tourner dans un premier sens de rotation et sont reliées à un premier arbre de turbine 36, et un second rotor 22b dont des roues 22ba sont configurées pour tourner dans un sens opposé de rotation et sont reliées à un second arbre de turbine 38 et sont intercalées entre les roues 22aa du rotor 22a (cf. figures 1 et 3).

Chaque roue de turbine comprend une rangée annulaire d'aubes qui comportent chacune un profil aérodynamique comportant un intrados et un extrados qui se rejoignent pour former un bord d'attaque et un bord de fuite des gaz dans la veine de turbine.

Le premier arbre 36 entraine en rotation la soufflante 12 ainsi que le rotor du compresseur basse pression 14. Ce premier arbre 36 est en outre engrené avec une couronne 40 d'un réducteur mécanique 42 à train épicycloïdal de type planétaire.

Le second arbre 38 est engrené avec le solaire 44 ou planétaire du réducteur 42.

Le réducteur 42 comprend en outre des satellites 41 engrenés respectivement avec le solaire 44 et la couronne 40 et portés par un porte-satellites 46 qui est fixé au carter d'échappement 28.

Chacun des carters 26 et 28 comprend en général un moyeu central, ainsi qu'un anneau extérieur qui entoure le moyeu et qui est relié à celui-ci par une série de bras sensiblement radiaux par rapport à l'axe longitudinal A de la turbomachine et traversant la veine de turbine. Le moyeu central du carter 28 s'étend autour d'au moins une partie du réducteur 42.

La figure 2 représente une autre turbomachine dans laquelle les éléments décrits dans ce qui précède sont désignés par les mêmes références. La description qui précède s'applique ici dans la mesure où elle ne contredit pas ce qui suit et n'est pas contraire à ce qui est illustré à la figure 2.

Les différences entre les turbomachines des figures 1 et 2 reposent notamment sur les paliers de guidage des arbres et rotors et sur la fixation du réducteur sur le carter de turbine 26 ou le carter d'échappement 28. Dans la figure 2, l'arbre haute pression 30 est centré et guidé en rotation par deux paliers amont, respectivement à billes 32 et à rouleaux 33, et par un palier aval 34 à rouleaux. Les paliers 32, 33 sont montés entre une extrémité amont de l'arbre 30 et le carter intermédiaire 24, et le palier 34 est monté entre une extrémité aval de l'arbre 30 et le carter de turbine 26. Contrairement à la figure 1, le porte-satellites 46 du réducteur 42 de la figure 2 est fixé au carter de turbine 26. Le porte-satellites 46 est ainsi relié au carter de turbine 26 par une paroi cylindrique 50 qui est avantageusement rigide. Cette paroi 50 traverse axialement les rotors 22a, 22b ainsi que le second arbre 38.

Le second arbre 38 a son extrémité aval engrenée avec le solaire, comme évoqué dans ce qui précède, et est en outre relié au dernier étage ou étage aval du second rotor 22b, c'est-à-dire à la dernière roue de ce rotor.

Le second arbre 38 est centré et guidé en rotation sur cette paroi 50 par l'intermédiaire de deux paliers de guidage, respectivement amont 56 et aval 58.

Le premier arbre 36 a son extrémité aval fixée à la couronne 40 du réducteur et son extrémité amont qui est fixée au dernier étage ou étage aval du premier rotor 22a, c'est-à-dire à la dernière roue de ce rotor. La couronne 40 est par ailleurs fixée à l'extrémité amont d'un porte-couronne 40a dont l'extrémité aval est fixée ou engrenée avec l'extrémité aval de l'arbre 36. Le porte-satellites 46 peut comprendre, ici du côté aval du réducteur 42, une portion annulaire ayant une section en forme de C ou S de façon à conférer au porte-satellites une certaine souplesse par déformation élastique, en particulier en direction radiale ainsi qu'en basculement (souplesse en rotation autour des axes perpendiculaires à l'axe moteur). Du fait de cette souplesse apportée par le porte-satellites 46, le porte-couronne 40a du réducteur 42 peut être lui rigide. L'inverse est envisageable, sous certaines conditions. Dans ce cas, le porte-couronne 40a serait souple ou conférerait une souplesse, et le porte-satellites 46 serait rigide. Le porte-couronne 40a comprendrait alors une portion annulaire ayant une section en forme de C ou S de façon à conférer à la couronne une certaine souplesse par déformation élastique, en particulier en radial ainsi qu'en basculement (souplesse en rotation autour des axes perpendiculaires à l'axe moteur). Dans cette deuxième configuration, avantageusement on intègre la souplesse hors du chemin d'effort allant de l'extrémité aval du porte-couronne 40a jusqu'au palier 60.

L'arbre 36 est guidé à l'amont par des paliers 52, 54 montés entre cet arbre 36 et le carter intermédiaire 24. Un premier de ces paliers est par exemple un palier amont à rouleaux 52, et un second de ces paliers est par exemple un palier aval à billes 54.

L'arbre 36 est en outre centré et guidé en rotation à l'aval par deux paliers de guidage, respectivement amont 60 et aval 62 tous les deux supportés par le carter d'échappement 28. Ces paliers sont avantageusement placés de part et d'autre du réducteur 42.L'invention est applicable aux turbomachines des figures 1 et 2. Les figures 3 et suivantes développent la configuration de la figure 2.

La figure 3 illustre en effet un mode de réalisation plus concret d'une turbomachine 10 selon l'invention. Dans la figure 3, tous les éléments déjà décrits dans ce qui précède sont désignés par les mêmes références.

En fonctionnement, le réducteur 42 est lubrifié et l'huile qui a lubrifié le réducteur doit être récupérée et évacuée en vue de son recyclage, pour éviter que cette huile s'accumule dans le réducteur et ne se transforme en coke du fait des températures relativement importantes qui règnent dans cet environnement. L'huile de lubrification du réducteur sert en outre à le refroidir en absorbant des calories. L'huile chauffée doit être évacuée et refroidie afin d'être réinjectée dans le système pour évacuer la chaleur du réducteur, celui-ci ne pouvant dépasser 200°C.

L'invention propose ainsi d'intégrer un dispositif 70 de récupération et d'évacuation d'huile entre le réducteur 42 et le carter d'échappement 28.

En fonctionnement, l'huile est centrifugée et se retrouve dans la couronne 40 du réducteur 42. Des passages 40b peuvent être prévus à la périphérie externe de la couronne 40 et/ou du porte-couronne 40a de façon à projeter l'huile par centrifugation sur le dispositif 70 qui est annulaire et s'étend en regard de ces passages 40b.

Le dispositif 70 comprend pour l'essentiel deux parties à savoir une gouttière annulaire 72 de récupération d'huile qui s'étend autour du réducteur 42 et en particulier des passages 40b, et un ou plusieurs conduits 74 d'évacuation d'huile qui traversent des bras 28a du carter d'échappement 28.

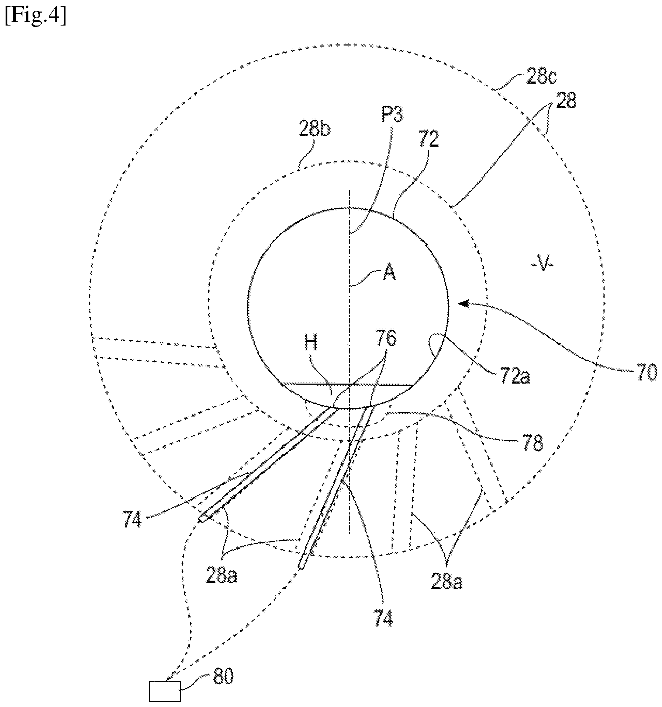

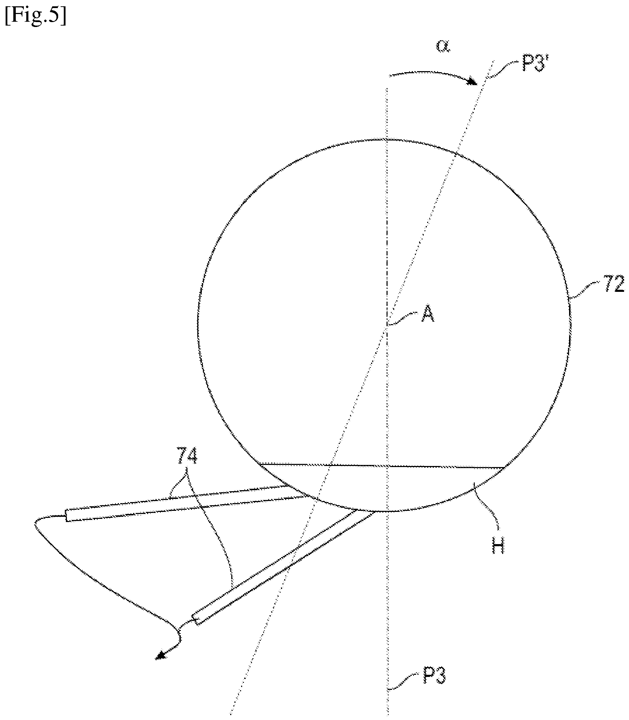

Les figures 4 et 5 sont des illustrations conceptuelles de l'invention. La gouttière 72 est représentée par un simple cercle centré sur l'axe A. La gouttière 72 comprend une surface annulaire radialement interne 72a qui récupère l'huile centrifugée par le réducteur 42 et sur laquelle peut s'écouler l'huile H jusqu'à la partie basse du dispositif 70, par gravité et du fait de la composante tangentielle conservée par l'huile. Cette partie basse correspond à la zone située à 6 heures ou 6 h par analogie avec le cadran d'une horloge, lorsque la turbomachine est en position normale d'utilisation sur un aéronef.

Les conduits 74 s'étendent radialement vers l'extérieur depuis la gouttière 72 qui comprend des ouvertures 76 de passage d'huile vers ces conduits 74. Le passage de l'huile depuis les ouvertures 76 de la gouttière 72 jusqu'aux conduits 74 se fait avantageusement par l'intermédiaire d'une chambre de récupération 78, à travers une cloison 98, comme cela sera décrit plus en détail dans ce qui suit.

Dans l'exemple représenté où les conduits 74 sont au nombre de deux, leurs extrémités radialement internes sont situées de part et d'autre d'un plan vertical P3 passant par l'axe A.

La figure 5 permet de constater que les positions de ces extrémités sont choisies pour que l'huile accumulée dans la partie basse puisse continuer à être évacuée dans tous les cas de vol par les deux conduits 74 lorsque la turbomachine est inclinée, et par exemple située dans une position où le plan médian P3' passant par l'axe A et entre les extrémités radialement internes des conduits 74, est incliné d'un angle α par rapport au plan P3.

Cet angle est choisi pour que dans toutes les attitudes de l'enveloppe de vol, les deux conduits soient noyés et puisse évacuer de l'huile. Cela permet de n'avoir qu'une seule pompe pour les deux conduits.

Les conduits 74 traversent les bras 28a et peuvent être inclinés par rapport à des plans passant par l'axe A, comme dans l'exemple représenté. L'inclinaison des conduits 74 dépend en fait de l'inclinaison des bras 28a, comme illustré à la figure 4.

L'invention est naturellement applicable à des bras qui seraient droits (non inclinés). La problématique serait la même avec des bras droits, à savoir limiter le maître couple et faire passer la récupération d'huile par plusieurs bras.

Les bras 28a du carter d'échappement 28 sont reliés à leurs extrémités radialement internes à une première virole annulaire 28b et à leurs extrémités radialement externes à une seconde virole annulaire 28c (figures 3 et 4). Ces viroles 28b, 28c définissent entre elles un tronçon de la veine de turbine V.

Les extrémités radialement externes des conduits 74 sont reliées par des moyens appropriés à une pompe 80, idéalement unique, qui peut être raccordée à un circuit de recyclage de l'huile pour sa réutilisation dans le moteur.

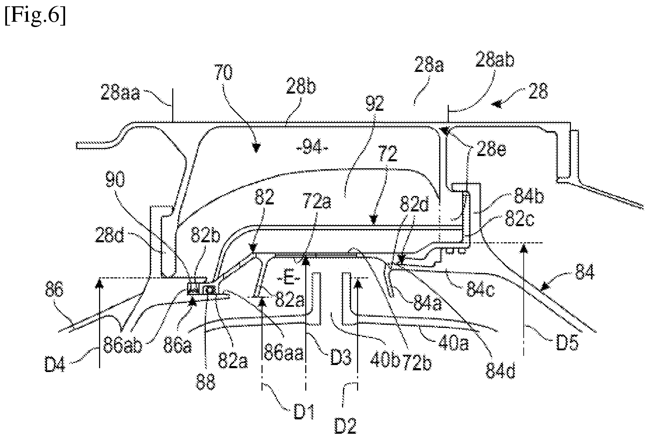

Les figures 6 à 9 sont des vues plus détaillées et à plus grande échelle du dispositif 70 de la figure 3.

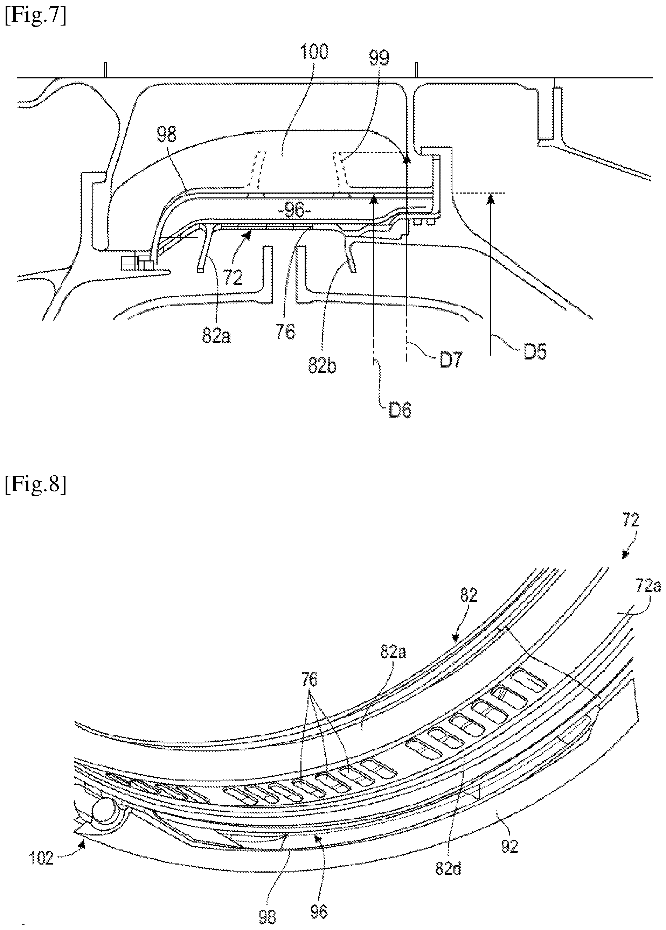

Les figures 6 et 7 montrent tout d'abord que les passages 40b du porte-couronne 40a sont orientés sensiblement radialement. Ils sont situés en regard de la surface 72a de la gouttière 72.

Dans l'exemple représenté, la gouttière 72 est formée par l'assemblage de deux pièces, à savoir deux parois annulaires 82, 84 montées coaxialement l'une à l'intérieur de l'autre.

Chacune de ses parois 82, 84 comporte une nervure annulaires 82a, 84a en saillie radialement vers l'intérieur et ces nervures 82a, 84a bordent axialement la surface 72a. Les nervures 82a, 84a canalisent l'huile lors de son écoulement sur la surface 72a.

La première paroi 82 comprend la surface 72a et la nervure 82a qui est située en amont de cette surface 72a. La nervure 82a est ici légèrement inclinée par rapport à un plan perpendiculaire à l'axe A, et s'étend d'amont en aval radialement vers l'extérieur.

L'extrémité amont de la paroi 82 est engagée axialement dans une gorge annulaire 86a d'un organe 86 fixé au carter d'échappement 28. Cet organe 86 comprend une bride annulaire de fixation à une bride annulaire amont 28d du carter d'échappement 28. La bride 28d est située sensiblement au droit des bords d'attaque 28aa des bras 28a.

La figure 3 montre que cet organe 86 peut être le support du palier 60.

L'extrémité amont de la paroi 82 comprend une surface cylindrique interne 82a en appui glissant sur une surface cylindrique latérale 86aa de la gorge 86a. Un joint annulaire d'étanchéité 88, par exemple à section en C, peut être engagé dans une rainure annulaire formée sur la surface 82a, ce joint étant destiné à coopérer avec la surface 86aa.

L'extrémité amont de la paroi 82 comprend également une surface annulaire radiale 82b située en regard d'une surface annulaire de fond 86ab de la gorge 86a. Un joint annulaire d'étanchéité 90, par exemple à section en Ω, peut être monté axialement entre ces surfaces 82b, 86ab.

L'extrémité aval de la paroi 82 comprend une bride annulaire 82c de fixation à une bride annulaire aval 28e du carter d'échappement 28, qui est située sensiblement au droit des bords de fuite 28ab de ces bras 28a.

Entre la surface 72a et la bride 82c, la paroi 82 comprend une surface cylindrique interne 82d de centrage destinée à coopérer avec la paroi 84.

La paroi 84 comprend une bride annulaire 84b de fixation à la bride 28e du carter d'échappement 28. La paroi 84 comprend en outre un rebord 84c sensiblement cylindrique orienté vers l'amont et comportant une surface cylindrique externe 84d destinée à coopérer avec la surface 82d de la paroi 82.

A son extrémité libre amont, la paroi 84 et en particulier le rebord 84c comprend la nervure 84a. La nervure 84a est située en aval de la surface 72a. La nervure 84a est ici légèrement inclinée par rapport à un plan perpendiculaire à l'axe A, et s'étend d'amont en aval radialement vers l'intérieur. En variante, elle pourrait être droite.

La figure 3 permet de voir que la paroi 84 fait partie du support de palier 62. Les nervures 82a, 84a délimitent axialement entre elles un espace annulaire E de récupération et de canalisation d'huile, qui est fermé à sa périphérie externe par la surface 72a de la gouttière 72.

La figure 6 permet de constater que les nervures 84a, 84b ont un diamètre interne minimal D1 (mesuré au niveau de leurs extrémités libres radialement internes) qui est inférieur au diamètre externe maximal D2 des passages 40b. Si les nervures 82a, 84a étaient portées par une même pièce, le montage du dispositif serait difficile voire impossible. Au contraire, le montage du dispositif 70 est ici facilité car il suffit de présenter les parois 82a, 84 de chaque côté du réducteur 42, puis de les déplacer en translation axiale l'une à l'intérieur de l'autre, jusqu'à ce que les brides 82c, 84b soient appliquées axialement l'une contre l'autre. Elles peuvent alors être fixées à la bride 28c.

Le montage de la gouttière 72 en deux parties permet de gagner de l'espace radial en plaçant la périphérie externe des passages 40a, qui peut correspondre à la périphérie externe de la bride de fixation de la couronne 40 et/ou du porte-couronne 40a, au plus proche de la gouttière sans devoir intégrer de l'espace pour permettre le montage sous les nervures 82a, 84a. La gouttière 72 comprend une surface annulaire radialement externe 72b qui est entourée par le carter d'échappement 28 et en particulier sa virole 28b. Cette surface 72b est avantageusement recouverte d'un revêtement annulaire 92 d'isolation thermique. Ce revêtement est lui-même séparé de la virole 28b par un espace annulaire 94 libre de circulation d'air de ventilation. L'intégration du revêtement thermique 92 entre le circuit d'huile et la veine V ne pourrait se faire si la gouttière 72 était monobloc avec le carter d'échappement 28. En effet, si l'on intégrait une gouttière monobloc au carter, on ne pourrait pas loger ce calorifugeage entre la gouttière et le carter. On aurait alors de la conduction thermique intense entre le carter très chaud (proche de la veine avoisinant les 550°C) et la gouttière transportant l'huile (qui ne doit pas dépasser 240°C).

Comme évoqué dans ce qui précède, la gouttière 72 comprend avantageusement une chambre de récupération d'huile 96 située en partie basse. Le plan de coupe de la figure 6 ne passe pas par la chambre 96 alors que le plan de coupe de la figure 7 passe par cette chambre 96, et est par exemple le plan P3 de la figure 4.

La chambre 96 est avantageusement configurée pour assurer la tranquillisation de l'huile, c'est-à-dire une partie de son dégazage ou sa désaération afin réduire le nombre de bulle d'air dans l'huile.

La chambre 96 est délimitée par une portion angulaire de la surface 72b et par la cloison 98 qui s'étend autour de cette portion sur une étendue angulaire prédéterminée, par exemple comprise entre 30 et 90°, et préférentiellement de 60°.

Les ouvertures 76 de la gouttière 72, évoquées dans ce qui précède, sont visibles aux figures 7 à 9, et assurent la communication fluidique entre l'intérieur de la gouttière 72 et la chambre 96. Les ouvertures 76 sont de forme quelconque et par exemple oblongue ou elliptique. Elles sont régulièrement réparties sur toute l'étendue angulaire de la chambre 96 (figure 8), qui est par exemple inférieur à 120° autour de l'axe A. Son étendue angulaire est adaptée à l'enveloppe de vol de l'avion pour assurer que les deux évacuations soient noyées à tout instant du vol.

Le nombre et la section des ouvertures 76 sont dimensionnés pour faire passer le débit d'huile maximal de lubrification du réducteur. Par ailleurs, l'huile tombant dans la chambre 96 via les ouvertures a tendance à se désaérer, ce qui est bénéfique pour la pompe 80 de récupération d'huile (moins il y a d'air dans l'huile, plus la pompe est efficace).

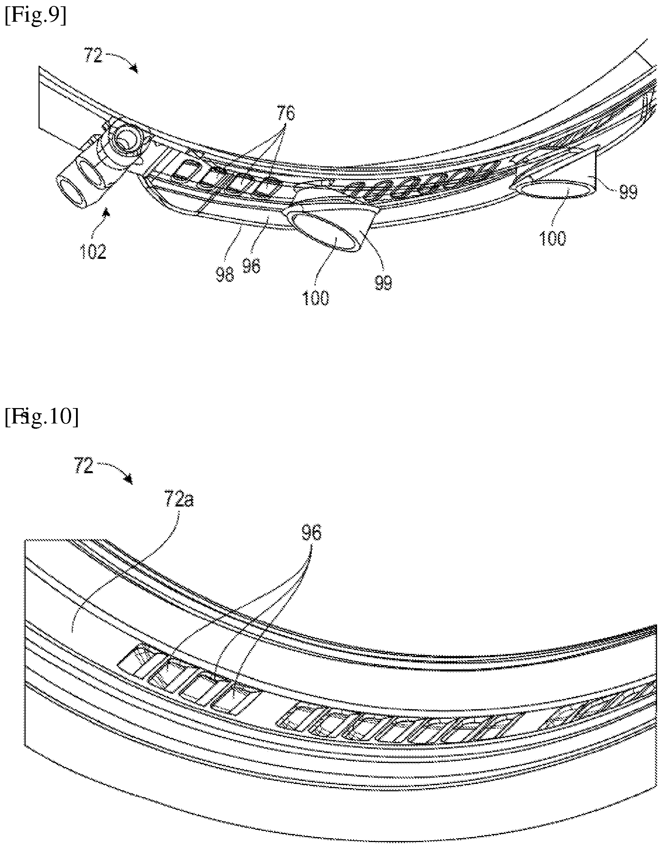

La figure 10 montre une variante de réalisation dans laquelle les ouvertures 76 sont inclinées et non pas essentiellement radiales. On peut par exemple profiler les ouvertures de façon à s'assurer que l'huile qui s'écoulera à leur niveau pénétrera dans la chambre sans poursuivre son écoulement.

Des éléments en saillie, tels que des perturbateurs d'écoulement, pourraient en outre être présents sur la surface 72a. Des dispositifs, tels que des ressauts à l'aval des ouvertures et des petites tôles placées perpendiculairement à la gouttière peuvent être ajoutées pour casser les anneaux d'huile par exemple. Des barrières pourraient être placées devant les ouvertures afin de bloquer l'huile en rotation par exemple.

La cloison 98, mieux visible à la figure 9, comprend des bossages 99 qui s'étendent radialement vers l'extérieur et dans lesquels sont formés des orifices 100 de raccordement fluidique de la chambre 96 aux conduits d'évacuation 74. Les bossages 99 et les orifices 100 ont des inclinaisons similaires aux conduits 74, comme évoqué dans ce qui précède en relation avec la figure 4.

Les figures 8 et 9 montrent en outre que la gouttière 72 peut être équipée d'un système de récupération du trop-plein de la chambre 96. Ce système 102 est de préférence situé au voisinage de l'une des extrémités circonférentielles de la chambre 96 ou de la cloison 98.

Le système 102 comprend par exemple un ou plusieurs ports d'évacuation du trop plein qui débouchent sur la surface 72a en vue du passage d'huile à travers le port, sans passer par la chambre de récupération 96. La sortie du port peut être raccordée à la pompe 80, par l'intermédiaire d'un autre conduit par exemple traversant un autre des bras 28a du carter 28. Le fait d'utiliser plusieurs ports permet d'évacuer l'huile en cas de trop plein en contournant l'évacuation principale.

Le système 102, la cloison 98 et donc la chambre 96 et les bossages 99, sont avantageusement portés par la même paroi 82, ce qui facilite le montage du dispositif 70 tel que décrit dans ce qui précède.

En dehors de la cloison 98, de ses bossages 99 et de la bride 82c, la paroi 82 a un diamètre externe maximal D3 supérieur au diamètre interne D4 de la bride 28d et inférieur au diamètre interne D5 de la bride 28e (figure 6). On comprend donc que la paroi 82 est montée à l'intérieur du carter 28 par translation axiale depuis l'aval. La figure 7 montre toutefois que la cloison 96 et le bossage sont situés sur des circonférences centrées sur l'axe A, qui ont respectivement des diamètres D6 et D7, supérieurs au diamètre interne D5 de la bride 28e. Pour permettre le montage de la paroi 82, il faudra donc prévoir une entaille de forme complémentaire à la périphérie interne de la bride 28e, donc ici située également à 6h.

Dans une variante non représentée, le nombre de conduits 74 du dispositif 70 pourrait être différent.

L'utilisation de deux conduits 74 disposés à proximité l'un de l'autre permet de résoudre deux problèmes :
- la quantité d'huile à évacuer dimensionne directement la taille des conduits 74 : cette dimension va impacter le maître couple du bras 28a et donc ses performances aérodynamiques. Il est donc intéressant d'avoir un conduit 74 le plus fin possible : dans notre cas on choisit de faire passer l'huile dans deux conduits afin de limiter l'encombrement ;
- la proximité des deux bras permet de s'assurer que sous tous les cas d'attitudes les deux bras seront mouillés, comme évoqué dans ce qui précède et représenté aux figures 4 et 5 ; on évite ainsi les problématiques de mise à l'air d'un des circuits et d'aspiration d'air par la pompe de récupération. En effet, les deux circuits se rassemblent à la sortie du carter ; cela permet de n'avoir qu'une seule pompe pour le circuit huile.

Dans encore une autre variante non représentée, le dispositif 70 selon l'invention pourrait équiper un autre type de turbomachine, tel qu'une turbomachine à hélices externes contrarotatives et non carénées (couramment appelées open rotor).

Les avantages apportés par l'invention sont nombreux et sont par exemple :
- limiter l'encombrement radial à l'intérieur du carter imposé par le réducteur et le dispositif de récupération d'huile ;
- assurer la récupération de l'huile tout en maintenant une distance entre le carter et l'huile pour éviter l'échauffement de l'huile ;
- assurer le passage de l'huile de la chambre 96 vers les conduits de récupération d'huile passant à travers les bras du carter ;
- limiter l'impact des conduits sur le maître couple des bras du carter ;
- etc.

## Revendications

1. Turbomachine (10) pour un aéronef, cette turbomachine ayant un axe longitudinal (A) et comportant :
- au moins un premier rotor de turbine (22a) relié à un premier arbre de turbine (36) et comportant des aubes de rotor situées dans une veine (V),
- un carter annulaire d'échappement (28) supportant au moins un palier (60, 62) de guidage en rotation dudit premier arbre autour de l'axe (A) et comprenant des bras (28a) situés dans ladite veine, en aval desdites aubes, et
- un réducteur mécanique (42) à train épicycloïdal de type planétaire qui comporte un solaire (44), une couronne (40), et un porte-satellites (46), le réducteur étant au moins en partie entouré par ledit carter d'échappement et l'un des éléments mobiles en rotation autour de l'axe (A) choisis parmi le solaire et la couronne du réducteur étant relié audit premier arbre, **caractérisée en ce que** ledit carter d'échappement porte un dispositif (70) de récupération et d'évacuation d'huile projetée par centrifugation en fonctionnement par le réducteur, ce dispositif comportant une gouttière annulaire (72) de récupération d'huile qui s'étend autour du réducteur et qui est raccordée à au moins un conduit (76) d'évacuation d'huile qui traverse un desdits bras dudit carter d'échappement.

2. Turbomachine (10) selon la revendication 1, dans laquelle ladite gouttière (72) comprend une surface annulaire radialement interne (72a) de réception et de guidage d'huile, qui est bordée axialement par deux nervures annulaires (82a, 84a).

3. Turbomachine (10) selon la revendication 2, dans laquelle les deux nervures (82a, 84a) comprennent une première nervure (82a) formée d'une seule pièce avec une première paroi annulaire (82), et une seconde nervure (84a) formée d'une seule pièce avec une seconde paroi annulaire (84), l'une des première et seconde parois comportant ladite surface (72a) et lesdites première et seconde parois annulaires étant montées coaxialement l'une à l'intérieur de l'autre.

4. Turbomachine (10) selon la revendication 3, dans laquelle lesdites premières et secondes parois (82, 84) comprennent des brides annulaires (82c, 84b) de fixation entre elles et à une bride annulaire de fixation (28e) dudit carter d'échappement.

5. Turbomachine (10) selon l'une des revendications 2 à 4, dans laquelle une cloison (96) s'étend autour d'une portion angulaire d'une surface annulaire radialement externe (72b) de la gouttière (70) et définit avec cette surface une chambre (96) de récupération d'huile, la gouttière comportant des ouvertures (76) débouchant sur lesdites surfaces annulaires (72a, 72b) pour la mise en communication fluidique de ladite chambre avec un espace inter-nervures (E), et ladite cloison (96) comportant au moins un orifice (100) raccordé audit au moins un conduit (74) en vue de l'évacuation d'huile récupérée dans ladite chambre.

6. Turbomachine (10) selon la revendication 5, dans laquelle ledit au moins un orifice (100) est formé dans un bossage (99) de la cloison (96).

7. Turbomachine (10) selon la revendication 5 ou 6, dans laquelle ledit dispositif (70) comprend deux conduits (74) d'évacuation d'huile et ladite cloison (98) comprend deux orifices (100) raccordés respectivement à ces deux conduits.

8. Turbomachine (10) selon l'une des revendications 5 à 7, dans laquelle ladite chambre (96) est traversée par un plan vertical (P3) passant par ledit axe (A).

9. Turbomachine (10) selon l'ensemble des revendications 7 et 8, dans laquelle lesdits orifices (100) sont situés de part et d'autre dudit plan.

10. Turbomachine (10) selon l'une des revendications précédentes, dans laquelle ledit au moins un conduit (74) est incliné par rapport à un plan passant par ledit axe (A).

11. Turbomachine (10) selon l'une des revendications précédentes, dans laquelle ladite gouttière (72) est entourée par un revêtement annulaire (92) d'isolation thermique.

12. Turbomachine (10) selon la revendication précédente, dans laquelle un espace annulaire (94) de circulation d'air est conservé entre ledit revêtement (92) et ledit carter d'échappement (28).

## Patentansprüche

1. Turbomaschine (10) für ein Flugzeug, wobei diese Turbomaschine eine Längsachse (A) aufweist und Folgendes umfasst:
- mindestens einen ersten Turbinenrotor (22a), der mit einer ersten Turbinenwelle (36) verbunden ist und Rotorschaufeln umfasst, die sich in einer Ader (V) befinden,
- ein ringförmiges Austrittsgehäuse (28), das mindestens ein Lager (60, 62) zur drehenden Führung der ersten Welle um die Achse (A) stützt und Arme (28a) umfasst, die sich in der Ader stromabwärts der Schaufeln befinden, und
- ein mechanisches Untersetzungsgetriebe (42) mit Umlaufrädergetriebe vom Planetentyp, das ein Sonnenrad (44), eine Krone (40) und einen Planetenträger (46) umfasst, wobei das Untersetzungsgetriebe mindestens teilweise von dem Austrittsgehäuse und einem der um die Achse (A) drehbeweglichen Elemente umgeben ist, die ausgewählt sind aus dem Sonnenrad und der Krone des Untersetzungsgetriebes, das mit der ersten Welle verbunden ist,
**dadurch gekennzeichnet, dass** das Austrittsgehäuse eine Vorrichtung (70) zur Rückgewinnung und Abführung von Öl, das im Betrieb durch Zentrifugierung von dem Untersetzungsgetriebe ausgeworfen wird, umfasst, wobei diese Vorrichtung eine ringförmige Rinne (72) zur Rückgewinnung von Öl umfasst, die sich um das Untersetzungsgetriebe erstreckt und die mit mindestens einer Leitung (76) zur Abführung von Öl, die einen der Arme des Austrittsgehäuses durchquert, verbunden ist.

2. Turbomaschine (10) nach Anspruch 1, wobei die Rinne (72) eine radial innere ringförmige Oberfläche (72a) zur Aufnahme und Führung von Öl umfasst, die axial von zwei ringförmigen Rippen (82a, 84a) umrandet ist.

3. Turbomaschine (10) nach Anspruch 2, wobei die zwei Rippen (82a, 84a) eine erste Rippe (82a), die aus einem einzigen Teil mit einer ersten ringförmigen Wand (82) gebildet ist, und eine zweite Rippe (84a), die aus einem einzigen Teil mit einer zweiten ringförmigen Wand (84) gebildet ist, umfassen, wobei eine von der ersten und der zweiten Wand die Oberfläche (72a) umfasst und die erste und zweite ringförmige Wand koaxial ineinander montiert sind.

4. Turbomaschine (10) nach Anspruch 3, wobei die erste und die zweite Wand (82, 84) ringförmige Flansche (82c, 84b) zur Befestigung zwischen diesen und einem ringförmigen Befestigungsflansch (28e) des Austrittsgehäuses umfassen.

5. Turbomaschine (10) nach einem der Ansprüche 2 bis 4, wobei sich eine Trennwand (96) um einen winkligen Abschnitt einer radial äußeren ringförmigen Oberfläche (72b) der Rinne (70) erstreckt und mit dieser Oberfläche eine Kammer (96) zur Rückgewinnung von Öl definiert, wobei die Rinne Öffnungen (76) umfasst, die in die ringförmigen Oberflächen (72a, 72b) münden, um die Kammer mit einem Rippenzwischenraum (E) in strömungstechnische Kommunikation zu versetzen, und wobei die Trennwand (96) mindestens eine Aussparung (100) umfasst, die im Hinblick auf die Abführung von in der Kammer zurückgewonnenem Öl mit mindestens einer Leitung (74) verbunden ist.

6. Turbomaschine (10) nach Anspruch 5, wobei die mindestens eine Aussparung (100) in einer Anhebung (99) der Trennwand (96) gebildet ist.

7. Turbomaschine (10) nach Anspruch 5 oder 6, wobei die Vorrichtung (70) zwei Leitungen (74) zur Abführung von Öl umfasst und die Trennwand (98) zwei Aussparungen (100) umfasst, die jeweils mit diesen zwei Leitungen verbunden sind.

8. Turbomaschine (10) nach einem der Ansprüche 5 bis 7, wobei die Kammer (96) von einer vertikalen Ebene (P3), die durch die Achse (A) verläuft, durchquert wird.

9. Turbomaschine (10) nach einem der Ansprüche 7 und 8, wobei sich die Aussparungen (100) auf beiden Seiten der Ebene befinden.

10. Turbomaschine (10) nach einem der vorstehenden Ansprüche, wobei die mindestens eine Leitung (74) in Bezug auf eine Ebene, die durch die Achse (A) verläuft, geneigt ist.

11. Turbomaschine (10) nach einem der vorstehenden Ansprüche, wobei die Rinne (72) von einer ringförmigen Beschichtung (92) zur Wärmeisolierung umgeben ist.

12. Turbomaschine (10) nach dem vorstehenden Anspruch, wobei ein ringförmiger Raum (94) zur Zirkulation von Luft zwischen der Beschichtung (92) und dem Austrittsgehäuse (28) aufrechterhalten wird.

## Claims

1. An aircraft turbine engine (10), said turbine engine having a longitudinal axis (A) and comprising:
- at least one first turbine rotor (22a) connected to a first turbine shaft (36) and comprising rotor vanes located in a duct (V),
- an annular exhaust casing (28) supporting at least one bearing (60, 62) for guiding in rotation said first shaft about the axis (A) and comprising arms (28a) located in said duct, downstream of said vanes, and
- a mechanical reduction gear (42) with epicyclic gear train of the planetary type which comprises a sun gear (44), a ring gear (40), and a planet carrier (46), the reduction gear being at least partly surrounded by said exhaust casing and one of the elements that can rotate about the axis (A) selected from the sun gear and the ring gear of the reduction gear being connected to said first shaft,
**characterised in that** said exhaust casing carries a device (70) for recovering and evacuating oil centrifugally sprayed in operation by the reduction gear, said device comprising an annular oil recovery gutter (72) which extends around the reduction gear and which is connected to at least one oil evacuation conduit (76) which passes through one of said arms of said exhaust casing.

2. The turbine engine (10) according to claim 1, wherein said gutter (72) comprises a radially internal annular surface (72a) of oil reception and guiding, which is axially bordered by two annular ribs (82a, 84a).

3. The turbine engine (10) of claim 2, wherein the two ribs (82a, 84a) comprise a first rib (82a) formed integrally with a first annular wall (82), and a second rib (84a) formed integrally with a second annular wall (84), one of the first and second walls comprising said surface (72a), and said first and second annular walls being mounted coaxially one within the other.

4. The turbine engine (10) of claim 3, wherein said first and second walls (82, 84) comprise annular flanges (82c, 84b) for attachment to each other and to an annular attachment flange (28e) of said exhaust casing.

5. The turbine engine (10) according to one of claims 2 to 4, wherein a partition (96) extends around an angular segment of a radially external annular surface (72b) of the gutter (70) and defines with this surface an oil recovery chamber (96) the gutter comprising openings (76) opening onto said annular surfaces (72a, 72b) for fluidly communicating said chamber with an inter-rib space (E), and said partition (96) comprising at least one orifice (100) connected to said at least one conduit (74) for evacuating recovered oil into said chamber.

6. The turbine engine (10) of claim 5, wherein said at least one orifice (100) is formed in a boss (99) of the partition (96).

7. The turbine engine (10) according to claim 5 or 6, wherein said device (70) comprises two oil evacuation conduits (74) and said partition (98) comprises two orifices (100) connected to these two conduits respectively.

8. The turbine engine (10) according to any of claims 5 to 7, wherein said chamber (96) is passed through by a vertical plane (P3) passing through said axis (A).

9. The turbine engine (10) according to all of claims 7 and 8, wherein said orifices (100) are located on either side of said plane.

10. The turbine engine (10) according to any of the preceding claims, wherein said at least one conduit (74) is inclined with respect to a plane passing through said axis (A).

11. The turbine engine (10) according to any of the preceding claims, wherein said gutter (72) is surrounded by an annular thermal insulation coating (92).

12. The turbine engine (10) according to the preceding claim, wherein an annular airflow space (94) is maintained between said coating (92) and said exhaust casing (28).
